# EUROPÄISCHE PATENTSCHRIFT

(11) **EP 2 818 361 B1**
(45) Veröffentlichungstag und Bekanntmachung des Hinweises auf die Patenterteilung: **04.05.2016**
(21) Anmeldenummer: 14173329.5
(22) Anmeldetag: 20.06.2014
(51) Int. Cl.: B60N 2/235, B60N 2/02, B60N 2/24, B60N 2/46

(54) **Fahrzeugsitz und Nutzkraftfahrzeug mit wenigstens einem Fahrzeugsitz**
Vehicle seat and commercial motor vehicle with at least one vehicle seat
Siège de véhicule et véhicule utilitaire équipé d'au moins un siège de véhicule

(30) Priorität: 26.06.2013 DE 102013106708
(43) Veröffentlichungstag der Anmeldung: 31.12.2014
(73) Patentinhaber: GRAMMER AG, 92224 Amberg (DE)
(72) Erfinder: Lorey, Konstantin, 92546 Schmidgaden (DE)
(74) Vertreter: Hannke, Christian

(56) Entgegenhaltungen:
- WO-A1-2005/084999
- DE-A1- 19 701 388
- US-A1- 2013 113 263

## Beschreibung

Die Erfindung betrifft einen Fahrzeugsitz mit einem Sitzteil, mit einer Rückenlehne und mit einer höhenverstellbaren Armlehne, bei welchem die höhenverstellbare Armlehne ein Armauflageteil und einen Hebelmechanismus zum Anheben oder Senken des Armauflageteils mit einem ortsfesten Basisbauteil, mit einem oder zwei an dem Basisbauteil angelenkten Schwenkhebelteilen und mit einem an dem oder an den Schwenkhebelteilen angelenkten höhenverstellbaren Unterbauteil zum Tragen des Armauflageteils aufweist.

Die Erfindung betrifft darüber hinaus ein Nutzkraftfahrzeug, insbesondere ein landwirtschaftliches Nutzkraftfahrzeug, mit wenigstens einem solchen Fahrzeugsitz.

Gattungsgemäße Fahrzeugsitze mit derartigen höhenverstellbaren Armlehnen sind aus dem Stand der Technik bereits bekannt. So lehrt beispielsweise die Patentschrift DE 10 2005 006 977 B4 eine höhenverstellbare Armlehne für einen Fahrzeugsitz mit einem entsprechend ausgebildeten Schwenkarm, mittels welchem eine Armauflage der Armlehne höhenverstellbar an dem Fahrzeugsitz angeordnet ist. Die Armlehne zeichnet sich durch eine gegenüber einer Längsachse des Schwenkarms nach oben geneigte Gasdruckfeder aus, um ein optimiertes Zusammenspiel zwischen der Gasdruckfeder und dem Schwenkarm bei einem stabilen, platzsparenden und einfachen Gesamtaufbau zu realisieren.

Weitere Fahrzeugsitze mit höhenverstellbaren Armlehnen sind z.B. aus der DE 197 01 388 A1 bzw. WO 2005/084 999 A1 bekannt.

Die Aufgabe der Erfindung ist es, gattungsgemäße mit einer höhenverstellbaren Armlehne ausgerüstete Fahrzeugsitze weiterzuentwickeln und insbesondere eine schnellere Höhenverstellung der Armlehne mit einem konstruktiv sehr geringen Aufwand zu ermöglichen. Die Aufgabe der Erfindung wird von einem Fahrzeugsitz mit einem Sitzteil, mit einer Rückenlehne und mit einer höhenverstellbaren Armlehne gelöst, bei welchem die höhenverstellbare Armlehne ein Armauflageteil und einen Hebelmechanismus zum Anheben oder Senken des Armauflageteils mit einem ortsfesten Basisbauteil, mit einem oder zwei an dem Basisbauteil angelenkten Schwenkhebelteilen und mit einem an dem oder an den Schwenkhebelteilen angelenkten höhenverstellbaren Unterbauteil zum Tragen des Armauflageteils aufweist, wobei sich die höhenverstellbare Armlehne durch eine Sperreinrichtung zum Sperren des Hebelmechanismus mit einem basisbauteilseitig angeordneten und eine erste Sperrverzahnung aufweisenden ersten Sperrteil, mit einem unterbauteilseitig angeordneten und eine weitere Sperrverzahnung aufweisenden zweiten Sperrteil, wobei die beiden Sperrteile um eine gemeinsame Drehachse zueinander drehbeweglich sind, und mit Sperrmitteln auszeichnet, die gegenüber den beiden Sperrteilen mittels eines Betätigungselements derart verlagerbar angeordnet sind, dass Gegenverzahnungen der Sperrmittel in die Sperrverzahnungen der Sperrteile einrückbar oder ausrückbar sind, um den Hebelmechanismus zu sperren oder entsperren.

Durch die derart wirkende Sperreinrichtung kann eine Höhenverstellung an der höhenverstellbaren Armlehne konstruktiv besonders einfach vorgenommen werden.

Die höhenverstellbare Armlehne ist hinsichtlich des Hebelmechanismus derart ausgestaltet, dass das Armauflageteil gegenüber einem Gestell des Fahrzeugsitzes höhenverstellbar ist. Insofern wird insbesondere das Armauflageteil gegenüber dem ortsfesten Basisbauteil des Hebelmechanismus angehoben oder abgesenkt.

Vorzugsweise umfasst der Hebelmechanismus zwei Schwenkhebelteile, mittels welchen das höhenverstellbare Unterbauteil des Armauflageteils mit dem ortsfesten Basisbauteil gelenkig verbunden ist, wobei das zweite Schwenkhebelteil im Wesentlichen zur Stabilisierung des höhenverstellbaren Unterbauteils dient, damit das Armauflageteil unabhängig von der eingestellten Höhe weitestgehend horizontal ausgerichtet bleibt.

Bei entsprechender Ausgestaltung kann ein solcher Hebelmechanismus auch mit nur einem Schwenkhebelteil realisiert sein. Jedoch sind aus Gründen der Stabilität und einer einfach bauenden Mechanik idealerweise zwei solcher Schwenkhebelteile derart in den Hebelmechanismus integriert, dass die Anlenkpunkte zwischen den beiden Schwenkhebelteilen und dem Basisbauteil auf der einen Seite und dem höhenverstellbaren Unterbauteil auf der anderen Seite ein Parallelogramm ausbilden. Hierbei bilden das Basisbauteil, die beiden Schwenkhebelteile und das höhenverstellbare Unterbauteil die durch die Anlenkpunkte miteinander verknüpften Schenkel des Parallelogramms.

Es versteht sich, dass die zueinander schwenkbaren und nicht schwenkbaren Bauteile des Hebelmechanismus nahezu beliebig ausgestaltet sein können, um eine kompakt bauende höhenverstellbare Armlehne an dem Fahrzeugsitz bereitstellen zu können. Zweckmäßig ist es jedoch, wenn die Bauteile jeweils aus einer Blechkonstruktion gebogen und derart durch die Anlenkpunkte miteinander beweglich verbunden sind, dass sie zumindest teilweise ineinander geschoben werden können, wenn die höhenverstellbare Armlehne in ihrer Höhe verstellt wird.

Es versteht sich weiter, dass die Komponenten der Sperreinrichtung unterschiedlich ausgestaltet und unterschiedlich zueinander angeordnet sein können, um hinsichtlich des Hebelmechanismus entsprechend einfach sperrend und entsperrend wirken zu können.

Um die Sperreinrichtung baulich besonders einfach gestalten zu können, ist es vorteilhaft, wenn das Betätigungselement ein mit der o.g. Drehachse beider Sperrteile drehbares Nockenteil und die Sperrmittel radial zu dieser Drehachse nach außen verlagerbare, die Gegensperrverzahnungen aufweisende Sperrschiebeteile umfassen, wobei die radial verlagerbaren Sperrschiebeteile und Nockenbereiche des drehbaren Nockenteils derart zueinander angeordnet sind, dass bei einer Drehung des Betätigungselements in eine erste Drehrichtung die Gegensperrverzahnungen der radial verlagerbaren Sperrschiebeteile durch das drehbare Nockenteil mit den Sperrverzahnungen in Eingriff bringbar sind.

Durch einen derart gewählten Aufbau können die Sperrmittel konstruktiv einfach nach radial außen verschieblich gelagert werden. Insofern kann eine zuverlässige Sperrung der Sperreinrichtung und ebenso des Hebelmechanismus der höhenverstellbaren Armlehne erzielt werden.

Um die Sperreinrichtung und damit auch den Hebelmechanismus der höhenverstellbaren Armlehne ebenso einfach wieder entsperren zu können, ist es vorteilhaft, wenn das Nockenteil Ausrückelemente umfasst, welche mit den radial verlagerbaren Sperrschiebeteilen derart in Wirkverbindung stehen, dass bei einer Drehung des Betätigungselements in eine der ersten Drehrichtung entgegengesetzte zweite Drehrichtung die Gegensperrverzahnungen der radial verlagerbaren Sperrschiebeteile durch das drehbare Nockenteil aus den Sperrverzahnungen ausrückbar sind.

Des Weiteren ist es vorteilhaft, wenn die Ausrückelemente Kontaktflächen aufweisen, welche bei einer Drehung des Betätigungselements in die zweite Drehrichtung mit Auflaufschrägen der radial verlagerbaren Sperrschiebeteile wechselwirken.

Durch diese Wechselwirkung der Kontaktflächen und der Auflaufschrägen können die radial verlagerbaren Sperrschiebeteile konstruktiv einfach auch nach radial innen, also auf die Drehachse des Nockenteils zu, verschoben werden, wodurch die entsprechenden Gegensperrverzahnungen aus den Sperrverzahnungen ausgerückt werden können. Hierbei kann der Hebelmechanismus dann frei bewegt und insbesondere das Armauflageteil höhenverstellt werden.

Die Sperreinrichtung kann sehr kompakt gebaut werden, wenn die Ausrückelemente radial weiter außen als die Nockenbereiche und in Umfangsrichtung des drehbaren Nockenteils versetzt zu den Nockenbereichen angeordnet sind.

Damit die Sperreinrichtung im Normalzustand den Hebelmechanismus betriebssicher sperren kann, ist es vorteilhaft, wenn die nach außen verlagerbaren Sperrschiebeteile derart federvorgespannt angeordnet sind, dass die Gegensperrverzahnungen mit den Sperrverzahnungen stets im Eingriff gehalten sind. Zumindest solange das Nockenteil nicht händisch in die zweite Drehrichtung gedreht wird. Eine sehr günstige Federvorspannung kann auch durch eine entsprechend federvorgespannte Drehachse bzw. des Nockenteils erzielt werden.

Der Hebelmechanismus kann auf das Armauflageteil wirkende Armauflagekräfte problemlos aufnehmen, wenn die Sperreinrichtung zwischen dem höhenverstellbaren Unterbauteil und einem der Schwenkhebelteile oder zwischen dem Basisbauteil und einem der Schwenkhebelteile wechselwirkend angeordnet ist.

Wirkt die Sperreinrichtung zwischen dem höhenverstellbaren Unterbauteil und einem der Schwenkhebelteile, kann das Betätigungselement von einer auf dem Fahrzeugsitz sitzenden Person besonders gut erreicht werden, da es seine Höhenposition mit dem höhenverstellbaren Unterbauteil verändern kann.

Hierbei kann das basisbauteilseitig angeordnete erste Sperrteil direkt an dem Basisbauteil befestigt sein. Baulich noch günstiger kann die entsprechende erste Sperrverzahnung unmittelbar durch das Basisbauteil ausgestaltet sein.

Ebenso kann das unterbauteilseitig angeordnete zweite Sperrteil direkt an dem höhenverstellbaren Unterbauteil befestigt sein. Konstruktiv wesentlich einfacher kann die entsprechende weitere Sperrverzahnung unmittelbar durch das höhenverstellbare Unterbauteil ausgestaltet sein.

Wirkt die Sperreinrichtung zwischen dem Basisbauteil und einem der Schwenkhebelteile, kann das Betätigungselement konstruktiv einfach alternativ auch ortsfest an der höhenverstellbaren Armlehne angeordnet werden.

Insbesondere eine vertikal nach oben gerichtete Höhenverstellung des Armauflageteils kann leichter vorgespannt werden, wenn die höhenverstellbare Armlehne eine Antriebseinrichtung mit einem Antriebselement zur kraftunterstützten Höhenverstellung des Armauflageteils umfasst.

Zwar können die Hebelverhältnisse des Hebelmechanismus derart gewählt werden, dass eine Bewegung des höhenverstellbaren Armauflageteils problemlos möglich ist. Eine komfortablere Höhenverstellung gelingt jedoch mithilfe einer Antriebseinrichtung, welche als Antriebselement beispielsweise ein Gasfederelement umfasst.

Eine baulich sehr einfache Lösung schlägt vor, dass das Antriebselement ein Zugfederelement umfasst. Das Zugfederelement ist hierbei derart in die höhenverstellbare Armlehne integriert, dass das höhenverstellbare Armauflageteil nahezu kräfteneutral hoch und runter verstellt werden kann.

Eine komfortablere aber auch kostenaufwendiger gestaltete Ausführungsvariante sieht vor, dass das Antriebselement einen elektrisch betriebenen Antriebsmotor umfasst.

Um eine nochmals verbesserte Anpassung der höhenverstellbaren Armlehne vornehmen zu können, ist es vorteilhaft, wenn das höhenverstellbare Unterbauteil ein Unterteil und ein gegenüber dem Unterteil verschiebliches Oberteil umfasst. Hierdurch kann das Armauflageteil quer zur Höhenverstellung und in Hauptsitzrichtung weiter vor oder weiter hinten platziert werden, so dass eine noch vielseitigere Armauflage erzielt werden kann.

Die Aufgabe der Erfindung wird außerdem noch von einem Nutzkraftfahrzeug, insbesondere von einem landwirtschaftlichen Nutzkraftfahrzeug, mit wenigstens einem Fahrzeugsitz gelöst, wobei sich das Nutzkraftfahrzeug bzw. das landwirtschaftlich genutzte Nutzkraftfahrzeug durch einen Fahrzeugsitz nach den Merkmalen des Anspruchs 1 auszeichnet.

Umfasst das Nutzkraftfahrzeug, insbesondere das landwirtschaftlich genutzte Nutzkraftfahrzeug, den erfindungsgemäßen Fahrzeugsitz, kann vorteilhafterweise erzielt werden, dass die Höhenverstellung an der Armlehne für eine auf dem Fahrzeugsitz sitzende Person wesentlich einfacher vorgenommen werden kann. Somit erfordert die Bedienung der höhenverstellbaren Armlehne auch wesentlich weniger Aufmerksamkeit von dieser Person, so dass eine Höhenverstellung des Armauflageteils speziell einen Fahrzeugführer des Nutzkraftfahrzeugs weniger stark von dessen eigentliche Aufgabe, nämlich das Führen des Fahrzeugs, ablenkt. Dies reduziert die Unfallgefahr ganz erheblich.

Weitere Vorteile, Ziele und Eigenschaften vorliegender Erfindung werden anhand anliegender Zeichnung und nachfolgender Beschreibung erläutert, in welchen beispielhaft ein mit einer erfindungsgemäßen Sperreinrichtung ausgerüsteter Fahrzeugsitz dargestellt und beschrieben ist. In der Zeichnung zeigen:
- Figur 1: schematisch eine erste Seitenansicht eines Fahrzeugsitzes mit einer höhenver-stellbaren Armlehne, dessen Hebelmechanismus mittels einer durch ein Betätigungselement betätigbaren Sperreinrichtung gesperrt oder entsperrt werden kann;
- Figur 2: schematisch eine weitere Seitenansicht des Fahrzeugsitzes mit einer vertikal weiter nach oben verstellten Armlehne;
- Figur 3: schematisch eine Rückansicht des Fahrzeugsitzes;
- Figur 4: schematisch eine Modellansicht einer händisch betätigbaren Sperreinrichtung mit einem entsprechenden Bediengriff;
- Figur 5: schematisch eine weitere Modellansicht der händisch betätigbaren Sperreinrichtung aus der Figur 4 im Zusammenspiel mit einer ein Zugfederelement umfassenden Antriebseinrichtung;
- Figur 6: schematisch eine Modellansicht einer motorunterstützten Sperreinrichtung;

- Figur 7: schematisch eine Teilansicht einer Mechanik der Sperreinrichtung; und
- Figur 8: schematisch eine Ansicht eines radial verschieblichen Sperrmittels der in der Figur 5 gezeigten Mechanik.

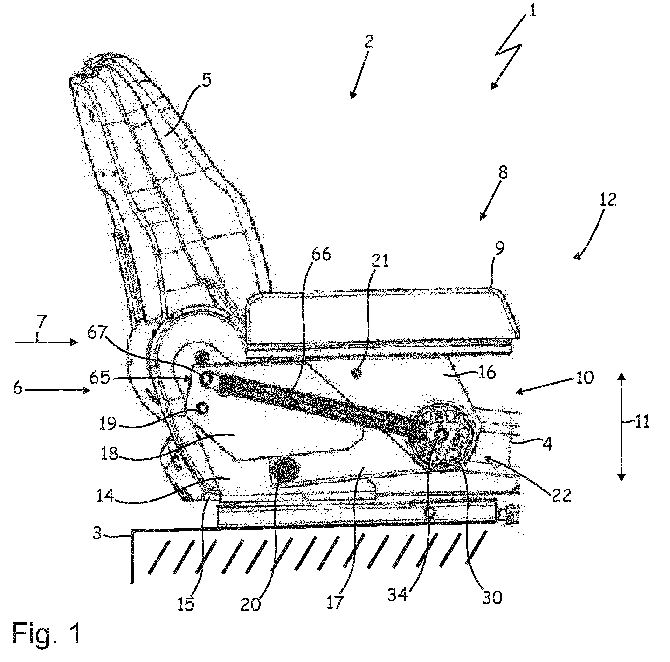

Bei dem in den Figuren 1 bis 3 gezeigten Fahrzeugsitz 1 handelt es sich im Speziellen um einen Nutzkraftfahrzeugsitz 2 eines hier nicht weiter gezeigten landwirtschaftlich genutzten Nutzkraftfahrzeugs 3.

Der Fahrzeugsitz 1 besitzt ein Sitzteil 4, eine Rückenlehne 5 und an seiner rechten Seite 6 in Hauptfahrrichtung 7 gesehen eine höhenverstellbare Armlehne 8 mit einem Armauflageteil 9. Die höhenverstellbare Armlehne 8 weist eine Hebelmechanik 10 auf, mittels welcher das Armauflageteil 9 in vertikaler Richtung 11 höhenverstellbar ist.

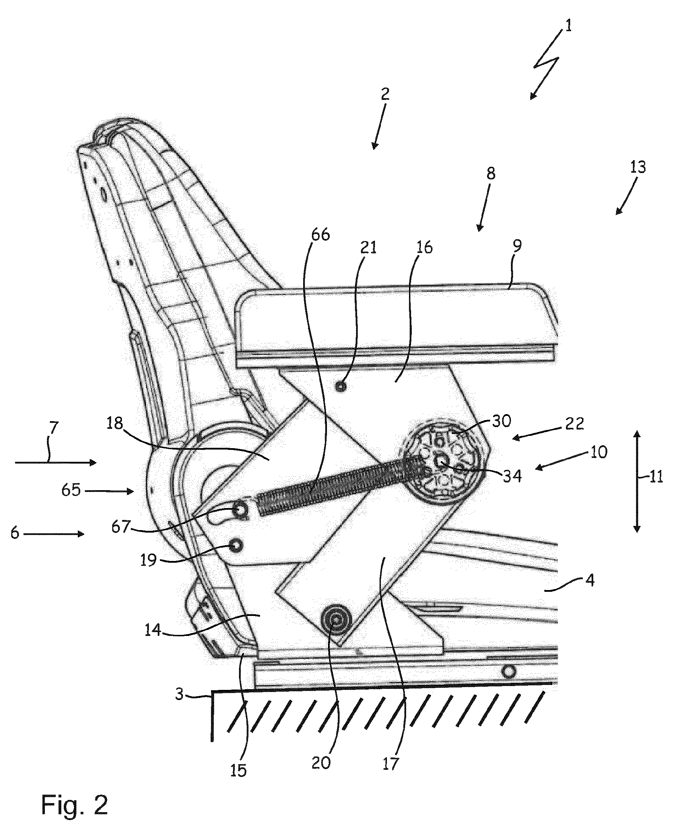

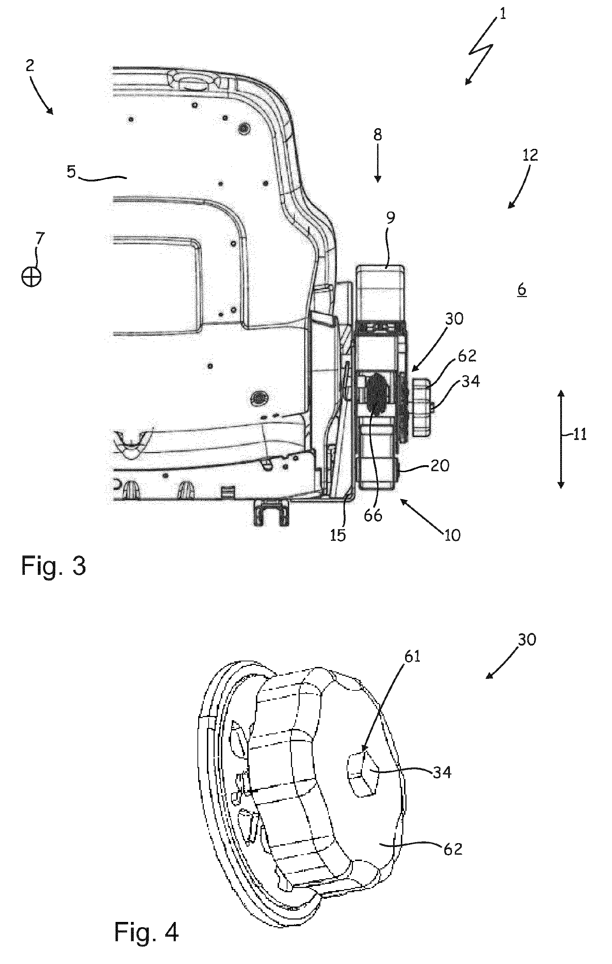

Beispielhaft ist das Armauflageteil 9 gemäß den Darstellungen der Figuren 1 und 3 in einer unteren Armauflageposition 12 und gemäß der Darstellung nach der Figur 2 in einer oberen Armauflageposition 13 dargestellt.

Der Hebelmechanismus 10 besteht in diesem Ausführungsbeispiel aus einem Basisbauteil 14, welches ortsfest an einem Gestell 15 des Fahrzeugsitzes 1 festgelegt ist.

Des Weiteren umfasst der Hebelmechanismus 10 ein gegenüber diesem Gestell 15 höhenverstellbares Unterbauteil 16 zum Unterbauen bzw. Tragen des Armauflageteils 9.

Zwischen dem ortsfesten Basisteil 14 und dem höhenverstellbaren Unterbauteil 16 sind nun ein erstes Schwenkhebelteil 17 und ein zweites Schwenkhebelteil 18 derart montiert, dass das höhenverstellbare Unterbauteil 16 beim Bewegen in vertikaler Richtung 11 stets nahezu waagerecht ausgerichtet bleibt, so dass auch das Armauflageteil 9 immer entsprechend waagerecht ausgerichtet ist, um einen hohen Benutzungskomfort für einen auf dem Fahrzeugsitz 1 sitzenden Fahrgast (hier nicht gezeigt) zu gewährleisten.

Die Schwenkhebelteile 17 bzw. 18 sind mittels Lagerstellen 19 bzw. 20 an dem ortsfesten Basisbauteil 14 angelenkt gehaltert. Entsprechend sind die beiden Schwenkhebelteile 17 bzw. 18 mittels weiterer Lagerstellen 21 bzw. 22 an dem höhenverstellbaren Unterbauteil 16 angelenkt. Diese Lagerstellen 19, 20, 21 bzw. 22 bilden jeweils einen hier nicht gesondert bezifferten Anlenkpunkt an dem Hebelmechanismus 10 aus.

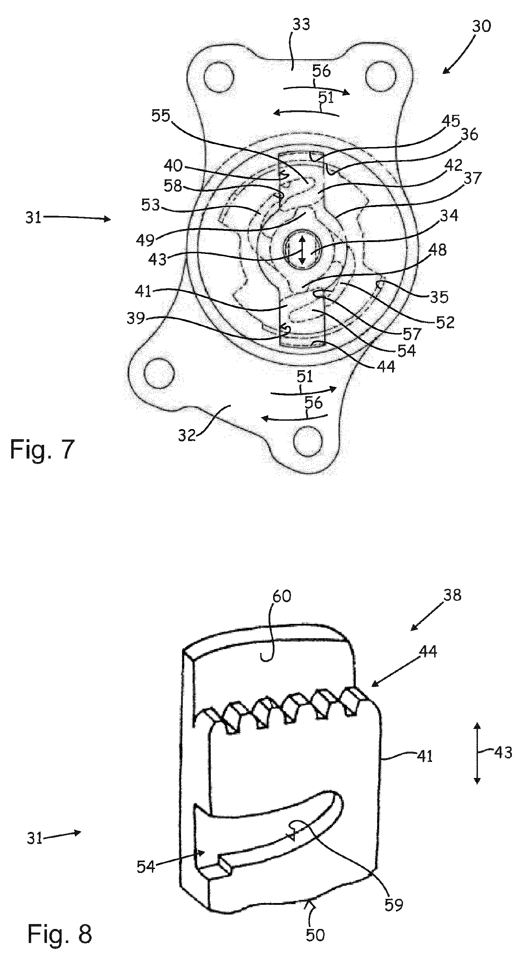

Um den Hebelmechanismus 10 hinsichtlich einer ungewollten Höhenverstellung in vertikaler Richtung 11 sperren zu können, umfasst die höhenverstellbare Armlehne 8 noch eine Sperreinrichtung 30 (siehe auch Figuren 7 und 8).

Eine erste mögliche Mechanik 31 dieser Sperreinrichtung 30 ist explizit gemäß den Darstellungen der Figuren 7 und 8 gezeigt, wobei die Sperreinrichtung 30 ein erstes Sperrteil 32 und ein zweites Sperrteil 33 umfasst. Die beiden Sperrteile 32 und 33 sind um eine gemeinsame Drehachse 34 zueinander drehbeweglich gelagert, wobei das erste Sperrteil 32 mittels einer hier nicht gezeigten Schraubverbindung an dem ersten Schwenkhebelteil 17 festgelegt ist. Entsprechend ist das zweite Sperrteil 33 mittels einer ebenfalls nicht weiter gezeigten Schraubverbindung an dem höhenverstellbaren Unterbauteil 16 festgelegt.

Somit ist das erste Sperrteil 32 im Wesentlichen basisbauteilseitig und das zweite Sperrteil 33 unterbauteilseitig innerhalb des Hebelmechanismus 10 montiert.

Jedenfalls ist die Sperreinrichtung 30 in diesem Ausführungsbeispiel zwischen dem höhenverstellbaren Unterbauteil 16 und dem ersten Schwenkhebelteil 17 platziert.

Das erste Sperrteil 32 umfasst eine erste Sperrverzahnung 35, welche auf die Drehachse 34 gerichtet ist und sich bogenförmig zumindest teilweise um diese Drehachse 34 erstreckt.

Das zweite Sperrteil 33 umfasst dementsprechend eine zweite Sperrverzahnung 36, welcher der ersten Sperrverzahnung 35 gegenüberliegt. Die zweite Sperrverzahnung 36 ist ebenso auf die Drehachse 34 gerichtet und erstreckt sich bogenförmig zumindest teilweise um die Drehachse 34.

Zwischen den beiden Sperrteilen 32 und 33 ist ein Zwischenteil 37 zum Lagern von Sperrmitteln 38 (siehe Figur 8) angeordnet. Das Zwischenteil 37 umfasst zwei Führungsnuten 39 und 40, wobei die erste Führungsnut 39 der ersten Sperrverzahnung 35 und die zweite Führungsnut 40 der zweiten Sperrverzahnung 36 gegenüberliegt.

Die Sperrmittel 38 umfassen in diesem Ausführungsbeispiel zwei Sperrschiebeteile 41 und 42 (hier nur exemplarisch gezeigt), wobei das erste Sperrschiebeteil 41 in radialer Richtung 43 in der ersten Führungsnut 39 radial zur Drehachse 34 verschieblich gelagert ist, und wobei das zweite Sperrschiebeteil 42 entsprechend in radialer Richtung 43 in der zweiten Führungsnut 40 radial zur Drehachse 34 verschieblich gelagert ist.

Die Sperrmittel 38 und damit auch die zwei Sperrschiebeteile 41 und 42 weisen jeweils eine Gegensperrverzahnung 44 bzw. 45 auf, welche mit der jeweiligen Sperrverzahnung 35 bzw. 36 in Eingriff gebracht werden können, wenn die Sperrschiebeteile 41 und 42 radial nach außen geschoben werden.

Damit die Sperrschiebeteile 41 und 42 konstruktiv einfach radial nach außen geschoben werden können, so dass die Gegensperrverzahnungen 44 bzw. 45 in die jeweils korrespondierenden Sperrverzahnungen 35 bzw. 36 eingerückt werden können, und hierdurch die beiden Sperrteile 32 und 33 miteinander verdrehsicher versperrt sind, umfasst die Sperreinrichtung 30 noch ein Betätigungselement 46 in Gestalt eines an der Drehachse 34 festgelegtes Nockenteil 47.

Das Nockenteil 47 formt zwei Nocken 48 und 49 aus, die jeweils mit einer Kurvenbahn 50 (nur exemplarisch beziffert, siehe Figur 8) des jeweiligen Sperrschiebeteils 41 bzw. 42 korrespondiert.

Wird das Betätigungselement 46 bzw. das Nockenteil 47 nun in eine erste Drehrichtung 51 gedreht, kommen die Nocken 48 bzw. 49 derart mit der jeweiligen Kurvenbahn 50 des Sperrschiebeteils 41 bzw. 42 derart in Wirkkontakt, das die Sperrschiebeteile 41 bzw. 42 durch die Nocken 48 bzw. 49 jeweils radial nach außen gedrückt werden.

Hierdurch sperrt die Sperreinrichtung 30 den Hebelmechanismus 10 insgesamt, so dass eine Höhenverstellung des höhenverstellbaren Armauflageteils 9 nicht möglich ist und die Armlehne 8 von oben durch Auflagekräfte voll belastbar ist.

Eine dauerhafte bzw. automatische Sperrung des Hebelmechanismus 10 kann dadurch konstruktiv einfach und betriebssicher erzielt werden, dass die Drehachse 34 bzw. das Nockenteil 47 in diese erste Drehrichtung 51 federvorbelastet ist, so dass die Gegensperrverzahnungen 44 bzw. 45 automatisch stets in die jeweils korrespondierenden Sperrverzahnungen 35 bzw. 36 eingerückt sind. Damit ist die höhenverstellbare Armlehne 8 im Normalzustand bzw. im Gebrauchszustand des Fahrzeugsitzes 1 gesperrt.

Soll nun eine Höhenverstellung an der höhenverstellbaren Armlehne 8 vorgenommen werden, müssen die Gegensperrverzahnungen 44 bzw. 45 aus den jeweils korrespondierenden Sperrverzahnungen 35 bzw. 36 ausgerückt werden. Dies gelingt konstruktiv sehr einfach durch an dem Nockenteil 47 angeformte Ausrückelemente 52 und 53. Diese Ausrückelemente 52 bzw. 53 sind radial weiter außen als die Nocken 48 und 49 am Umfang des Nockenteils 47 und zudem in Umfangsrichtung versetzt ausgebildet. Die Ausrückelemente 52 bzw. 53 können hierbei mit entsprechend ausgeformten Materialausnehmungen 54 bzw. 55 der Sperrschiebeteile 41 bzw. 42 korrespondieren, wenn die Drehachse 34 und damit auch das Nockenteil 47 in eine zweite Drehrichtung 56, welcher der ersten Drehrichtung 51 entgegengesetzt ist, gedreht wird.

Die Ausrückelemente 52, 53 gestalten hierbei Kontaktflächen 57 bzw. 58 aus, welche bei einer Drehung des Betätigungselements 46 in die zweite Drehrichtung 56 mit entsprechend geformten Auflaufschrägen 59 (hier nur exemplarisch beziffert, siehe Figur 8) der radial verlagerbaren Sperrschiebeteile 41 bzw. 42 wechselwirken.

Hierbei greifen die Ausrückelemente 52 bzw. 53 besonders platzsparend in die Materialausnehmungen 54 bzw. 55 ein.

Insofern werden bei einer Drehung des Nockenteils 47 in die zweite Drehrichtung 56 die beiden Nocken 48 und 49 von der jeweiligen Kurvenbahn 50 des Sperrschiebeteils 41 bzw. 42 entfernt, wobei gleichzeitig oder etwas zeitversetzt die Kontaktflächen 57 bzw. 58 der Ausrückelemente 52 mit der jeweiligen an dem entsprechenden Sperrschiebeteil 41 bzw. 42 ausgeformten Auflaufschräge 59 derart in Kontakt tritt, dass die Sperrschiebeteile 41 bzw. 42 radial nach innen verschoben, dass heißt auf die Drehachse 34 zu bewegt, werden.

Seitlich oberhalb der Gegensperrverzahnungen 44 bzw. 45 sind noch Axialführungsflächen 60 ausgebildet, mittels welchen eine verbesserte Führung der Sperrschiebeteile 41 bzw. 42 in den Führungsnuten 39 und 40 gewährleistet werden können.

Für eine einfache Drehung der Drehachse 34 ist an dem nach außen ragenden Ende 61 der Drehachse 34 ein Drehgriff 62 (siehe Figuren 3, 4 und 5) aufgesteckt, der händisch gut gepackt und in die erste Drehrichtung 51 oder in die zweite Drehrichtung 56 gedreht werden kann.

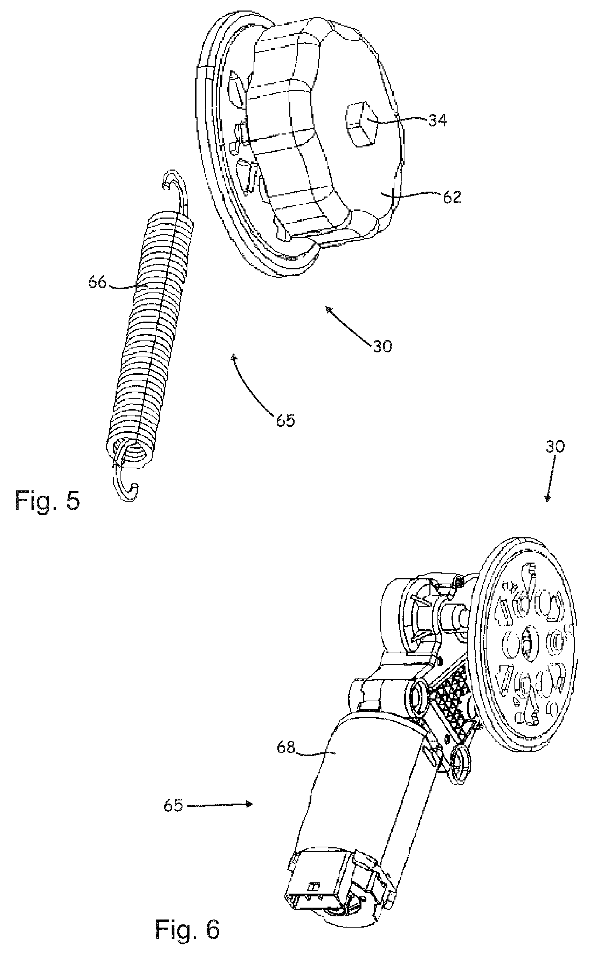

Darüber hinaus verfügt die höhenverstellbare Armlehne 8 zweckmäßigerweise noch über eine Antriebseinrichtung 65 (siehe Figur 6), mittels welcher eine Höhenverstellung an der Armlehne 8 einfacher vorgenommen werden kann.

In diesem Ausführungsbeispiel umfasst die Antriebseinrichtung 65 ein Zugfederelement 66, welches insbesondere gemäß der Darstellung der Figur 5 im Zusammenhang mit der Sperreinrichtung 30 gezeigt ist.

Dieses Zugfederelement 66 ist einerseits an einem Bolzen 67 des Basisbauteils 14 und andererseits in geeigneter Weise an der Drehachse 34 derart eingehakt, dass das höhenverstellbare Unterbauteil 16 bei entsperrter Sperrvorrichtung 30 immer leicht nach oben angehoben wird. Hierdurch ist eine komfortablere Einstellung der höhenverstellbaren Armlehne 8 erzielt.

Eine noch komfortablere Einstellung kann erreicht werden, wenn die Antriebseinrichtung 65 alternativ mit einem elektrischen Antriebsmotor 68 ausgerüstet ist, wie gemäß der Darstellung nach der Figur 6 gezeigt ist.

Es versteht sich, dass es sich bei dem vorstehend erläuterten Ausführungsbeispiel lediglich um eine erste Ausgestaltung des durch die Merkmale des Anspruchs 1 definierten, erfindungsgemäßen Fahrzeugsitzes handelt. Insofern beschränkt sich die Ausgestaltung der Erfindung nicht auf dieses Ausführungsbeispiel.

### Bezugszeichenliste

- 1: Fahrzeugsitz
- 2: Nutzkraftfahrzeugsitz
- 3: landwirtschaftliches Nutzkraftfahrzeug
- 4: Sitzteil
- 5: Rückenlehne
- 6: rechte Seite
- 7: Hauptfahrrichtung
- 8: höhenverstellbare Armlehne
- 9: Armauflageteil
- 10: Hebelmechanismus
- 11: vertikale Richtung
- 12: untere Armauflageposition
- 13: obere Armauflageposition
- 14: Basisbauteil
- 15: Gestell
- 16: höhenverstellbares Unterbauteil
- 17: erstes Schwenkhebelteil
- 18: zweites Schwenkhebelteil
- 19: erste Lagerstelle
- 20: zweite Lagerstelle
- 21: dritte Lagerstelle
- 22: vierte Lagerstelle
- 30: Sperreinrichtung
- 31: Mechanik der Sperreinrichtung
- 32: erstes Sperrteil
- 33: zweites Sperrteil
- 34: Drehachse
- 35: erste Sperrverzahnung
- 36: zweite Sperrverzahnung
- 37: Zwischenteil
- 38: Sperrmittel
- 39: erste Führungsnut
- 40: zweite Führungsnut
- 41: erstes Sperrschiebeteil
- 42: zweites Sperrschiebeteil
- 43: radiale Richtung
- 44: erste Gegensperrverzahnung
- 45: zweite Gegensperrverzahnung
- 46: Betätigungselement
- 47: Nockenteil
- 48: erster Nocken
- 49: zweiter Nocken
- 50: Kurvenbahn
- 51: erste Drehrichtung
- 52: erstes Ausrückelement
- 53: zweites Ausrückelement
- 54: erste Materialausnehmung
- 55: zweite Materialausnehmung
- 56: zweite Drehrichtung
- 57: erste Kontaktfläche
- 58: zweite Kontaktfläche
- 59: Auflaufschrägen
- 60: Axialführungsflächen
- 61: Ende
- 62: Drehgriff
- 65: Antriebseinrichtung
- 66: Zugfederelement
- 67: Bolzen
- 68: Antriebsmotor

## Patentansprüche

1. Fahrzeugsitz (1, 2) mit einem Sitzteil (4), mit einer Rückenlehne (5) und mit einer höhenverstellbaren Armlehne (8), bei welchem die höhenverstellbare Armlehne (8) ein Armauflageteil (9) und einen Hebelmechanismus (10) zum Anheben oder Senken des Armauflageteils (9) mit einem ortsfesten Basisbauteil (14), mit einem oder zwei an dem Basisbauteil (14) angelenkten Schwenkhebelteilen (17, 18) und mit einem an dem oder an den Schwenkhebelteilen (17, 18) angelenkten höhenverstellbaren Unterbauteil (16) zum Tragen des Armauflageteils (9) aufweist,
**gekennzeichnet durch**
eine Sperreinrichtung (30) zum Sperren des Hebelmechanismus (10) mit einem basisbauteilseitig angeordneten und eine erste Sperrverzahnung (35) aufweisenden ersten Sperrteil (32), mit einem unterbauteilseitig angeordneten und eine weitere Sperrverzahnung (36) aufweisenden zweiten Sperrteil (33), wobei die beiden Sperrteile (32, 33) um eine gemeinsame Drehachse (34) zueinander drehbeweglich gelagert sind, J und mit Sperrmitteln (38), die gegenüber den beiden Sperrteilen (32, 33) mittels eines Betätigungselements (46) derart verlagerbar angeordnet sind, dass Gegensperrverzahnungen (44, 45) der Sperrmittel (38) in die Sperrverzahnungen (35, 36) der Sperrteile (32, 33) einrückbar oder ausrückbar sind, um den Hebelmechanismus (10) zu sperren oder entsperren.

2. Fahrzeugsitz (1, 2) nach Anspruch 1,
**dadurch gekennzeichnet, dass**
das Betätigungselement (46) ein mit der Drehachse (34) drehbares Nockenteil (47) und die Sperrmittel (38) radial zu dieser Drehachse (34) nach außer verlagerbare, die Gegensperrverzahnungen (44, 45) aufweisende Sperrschiebeteile (41, 42) umfassen, wobei die radial verlagerbaren Sperrschiebeteile (41, 42) und Nockenbereiche (48, 49) des drehbaren Nockenteils (47) derart zueinander angeordnet sind, dass bei einer Drehung des Betätigungselements (46) in eine erste Drehrichtung (51) die Gegensperrverzahnungen (44, 45) der radial verlagerbaren Sperrschiebeteile (41, 42) durch das drehbare Nockenteil (47) mit den Sperrverzahnungen (35, 36) in Eingriff bringbar sind.

3. Fahrzeugsitz (1, 2) nach Anspruch 2,
**dadurch gekennzeichnet, dass**
das Nockenteil (47) Ausrückelemente (52, 53) umfasst, welche mit den radial verlagerbaren Sperrschiebeteilen (41, 42) derart in Wirkverbindung stehen, dass bei einer Drehung des Betätigungselements (46) in eine der ersten Drehrichtung (51) entgegengesetzte zweite Drehrichtung (56) die Gegensperrverzahnungen (44, 45) der radial verlagerbaren Sperrschiebeteile (41, 42) durch das drehbare Nockenteil (47) aus den Sperrverzahnungen (35, 36) ausrückbar sind.

4. Fahrzeugsitz (1, 2) nach Anspruch 3,
**dadurch gekennzeichnet, dass**
die Ausrückelemente (52, 53) Kontaktflächen (57, 58) aufweisen, welche bei einer Drehung des Betätigungselements (46) in die zweite Drehrichtung (56) mit Auflaufschrägen (59) der radial verlagerbaren Sperrschiebeteile (41, 42) wechselwirken.

5. Fahrzeugsitz (1, 2) nach Anspruch 3 oder 4,
**dadurch gekennzeichnet, dass**
die Ausrückelemente (52, 53) radial weiter außen als die Nockenbereiche (48, 49) und in Umfangsrichtung des drehbaren Nockenteils (47) versetzt zu den Nockenbereichen (48, 49) angeordnet sind.

6. Fahrzeugsitz (1, 2) nach einem der Ansprüche 2 bis 5,
**dadurch gekennzeichnet, dass**
die nach außen verlagerbaren Sperrschiebeteile (41, 42) derart federvorgespannt angeordnet sind, dass die Gegensperrverzahnungen (44, 45) mit den Sperrverzahnungen (35, 36) stets im Eingriff gehalten sind.

7. Fahrzeugsitz (1, 2) nach einem der Ansprüche 1 bis 6,
**dadurch gekennzeichnet, dass**
die Sperreinrichtung (30) zwischen dem höhenverstellbaren Unterbauteil (16) und einem der Schwenkhebelteile (17, 18) oder zwischen dem Basisbauteil (14) und einem der Schwenkhebelteile (17, 18) wechselwirkend angeordnet ist.

8. Fahrzeugsitz (1, 2) nach einem der Ansprüche 1 bis 7,
**gekennzeichnet, durch**
eine Antriebseinrichtung (65) mit einem Antriebselement zur kraftunterstützten Höhenverstellung des Armauflageteils (9).

9. Fahrzeugsitz (1, 2) nach Anspruch 8,
**dadurch gekennzeichnet, dass**
das Antriebselement ein Zugfederelement (66) umfasst.

10. Fahrzeugsitz (1, 2) nach Anspruch 8 oder 9,
**dadurch gekennzeichnet, dass**
das Antriebselement einen elektrisch betriebenen Antriebsmotor (68) umfasst.

11. Nutzkraftfahrzeug, insbesondere landwirtschaftliches Nutzkraftfahrzeug (3), mit wenigstens einem Fahrzeugsitz (1, 2),
**gekennzeichnet, durch**
einen Fahrzeugsitz (1, 2) nach einem der vorhergehenden Ansprüche.

## Claims

1. Vehicle seat (1, 2), comprising a seat part (4), a backrest (5) and a height-adjustable armrest (8), in which the height-adjustable armrest (8) comprises an arm support part (9) and a lever mechanism (10) for lifting or lowering the arm support part (9) and comprising a stationary base component (14) that comprises one or two pivot lever parts (17, 18) articulated to the base component (14), and a height-adjustable lower component (16) that is articulated to the pivot lever part(s) (17, 18) for carrying the arm support part (9),
**characterised by**
a locking device (30) for locking the lever mechanism (10) by means of a first locking part (32) that is arranged on the side of the base component and comprises first locking teeth (35), comprising a second locking part (33) that is arranged on the side of the lower component and comprises further locking teeth (36), the two locking parts (32, 33) being mounted so as to rotate relative to one another about a common rotary shaft (34), and comprising locking means (38), which are arranged so as to be displaceable relative to the two locking parts (32, 33) by means of an actuating element (46) in such a way that counter locking teeth (44, 45) of the locking means (38) can engage in or disengage from the locking teeth (35, 36) of the locking parts (32, 33) in order to lock or unlock the lever mechanism (10).

2. Vehicle seat (1, 2) according to claim 1, **characterised in that** the actuating element (46) comprises a cam part (47) that can be rotated together with the rotary shaft (34), and the locking means (38) comprise locking sliding parts (41, 42) that can be displaced outwards, radially with respect to this rotary shaft (34), and comprise the counter locking teeth (44, 45), the radially displaceable locking sliding parts (41, 42) and cam regions (48, 49) of the rotatable cam part (47) being arranged relative to one another in such a way that when the actuating element (46) is rotated in a first rotational direction (51), the counter-locking teeth (44, 45) of the radially displaceable locking sliding parts (41, 42) can be brought into engagement with the locking teeth (35, 36) by means of the rotatable cam part (47).

3. Vehicle seat (1, 2) according to claim 2, **characterised in that** the cam part (47) comprises disengagement elements (52, 53), which are operatively connected to the radially displaceable locking sliding parts (41, 42) in such a way that, when the actuating element (46) is rotated in a second rotational direction (56) counter to the first rotational direction (51), the counter locking teeth (44, 45) of the radially displaceable locking sliding parts (41, 42) can be disengaged from the locking teeth (35, 36) by means of the rotatable cam part (47).

4. Vehicle seat (1, 2) according to claim 3, **characterised in that** the disengagement elements (52, 53) have contact faces (57, 58) that interact with approach slopes (59) of the radially displaceable locking sliding parts (41, 42) when the actuating element (46) is rotated in the second rotational direction (56).

5. Vehicle seat (1, 2) according to either claim 3 or claim 4, **characterised in that** the disengagement elements (52, 53) are arranged radially further out than the cam regions (48, 49) and are offset with respect to the cam regions (48, 49) in the peripheral direction of the rotatable cam part (47).

6. Vehicle seat (1, 2) according to any of claims 2 to 5, **characterised in that** the outwardly displaceable locking sliding parts (41, 42) are arranged spring preloaded in such a way that the counter locking teeth (44, 45) are always kept in engagement with the locking teeth (35, 36).

7. Vehicle seat (1, 2) according to any of claims 1 to 6, **characterised in that** the locking device (30) is arranged in an interactive manner between the height-adjustable lower component (16) and one of the pivot lever parts (17, 18) or between the base component (14) and one of the pivot lever parts (17, 18).

8. Vehicle seat (1, 2) according to any of claims 1 to 7, **characterised by** a drive device (65) that comprises a drive element for power-assisted height adjustment of the arm support part (9).

9. Vehicle seat (1, 2) according to claim 8, **characterised in that** the drive element comprises a tension spring element (66).

10. Vehicle seat (1, 2) according to either claim 8 or claim 9, **characterised in that** the drive element comprises an electrically operated drive motor (68).

11. Utility motor vehicle, in particular an agricultural utility motor vehicle (3), comprising at least one vehicle seat (1, 2), **characterised by** a vehicle seat (1, 2) according to any of the preceding claims.

## Revendications

1. Siège de véhicule (1, 2), avec une partie d'assise (4), avec un dossier (5) et avec un accoudoir (8) réglable en hauteur, dans lequel l'accoudoir (8) réglable en hauteur comprend une partie d'appui de bras (9) et un mécanisme à levier (10) pour le levage ou l'abaissement de la partie d'appui de bras (9) avec une pièce de base fixe (14), avec une ou deux parties de leviers articulés (17, 18) articulées au niveau de la pièce de base (14) et avec une pièce inférieure (16) réglable en hauteur articulée au niveau de la ou des parties de leviers articulés (17, 18) pour le support de la partie d'appui de bras (9),
**caractérisé par**
un dispositif de blocage (30) pour le blocage du mécanisme à levier (10) avec une première partie de blocage (32) disposée du côté de la pièce de base et comprenant une première denture de blocage (35), avec une deuxième partie de blocage (33) disposée du côté de la pièce inférieure et comprenant une autre denture de blocage (36), les deux parties de blocage (32, 33) étant logées de manière rotative entre elles autour d'un axe de rotation commun (34), et avec des moyens de blocage (38), qui sont disposés de manière mobile par rapport aux deux parties de blocage (32, 33) au moyen d'un élément d'actionnement (46), de façon à ce que des contre-dentures de blocage (44, 45) des moyens de blocage (38) peuvent être engagés dans les dentures de blocage (35, 36) des parties de blocage (32, 33) ou dégagés de celles-ci afin de bloquer ou de débloquer le mécanisme à levier (10).

2. Siège de véhicule (1, 2) selon la revendication 1, **caractérisé en ce que** l'élément d'actionnement (46) comprend une partie à came (47) rotative avec l'axe de rotation (34) et les moyens de blocage (38) comprennent des parties coulissantes de blocage (41, 42) mobiles radialement vers l'extérieur par rapport à cet axe de rotation (34), comprenant les contre-dentures de blocage (44, 45), les parties coulissantes de blocage (41, 42) mobiles radialement et des zones à cames (48, 49) de la partie à came rotative (47) étant disposées les unes par rapport aux autres de façon à ce que, lors d'une rotation de l'élément d'actionnement (46) dans un premier sens de rotation (51), les contre-dentures de blocage (44, 45) des parties coulissantes de blocage (41, 42) mobiles radialement peuvent être engrenés, par la partie à came rotative (47), avec les dentures de blocage (35, 36).

3. Siège de véhicule (1, 2) selon la revendication 2, **caractérisé en ce que** la partie à came (47) comprend des éléments de débrayage (52, 53) qui sont reliés de manière fonctionnelle avec les parties coulissantes de blocage (41, 42) mobiles radialement de façon à ce que, lors d'une rotation de l'élément d'actionnement (46) dans un deuxième sens de rotation (56) opposé au premier sens de rotation (51), les contre-dentures de blocage (44, 45) des parties coulissantes de blocage (41, 42) mobiles radialement peuvent être débrayées par la partie à came rotative (47) hors des dentures de blocage (35, 36).

4. Siège de véhicule (1, 2) selon la revendication 3, **caractérisé en ce que** les éléments de débrayage (52, 53) présentent des surfaces de contact (57, 58) qui, lorsque d'une rotation de l'élément d'actionnement (46) dans le deuxième sens de rotation (56), interagissent avec des pans inclinés (59) des parties coulissantes de blocage (41, 42) mobiles radialement.

5. Siège de véhicule (1, 2) selon la revendication 3 ou 4, **caractérisé en ce que** les éléments de débrayage (52, 53) sont disposés plus loin radialement que les zones à cames (48, 49) et décalés dans la direction périphérique de la partie à came rotative (47) par rapport aux zones à cames (48, 49).

6. Siège de véhicule (1, 2) selon l'une des revendications 2 à 5, **caractérisé en ce que** les parties coulissantes de blocage (41, 42) mobiles radialement sont disposées avec une précontrainte à ressort de façon à ce que les contre-dentures de blocage (44, 45) soient maintenues en permanence en engrènement avec les dentures de blocage (35, 36).

7. Siège de véhicule (1, 2) selon l'une des revendications 1 à 6, **caractérisé en ce que** le dispositif de blocage (30) est disposé alternativement entre la partie inférieure (16) réglable en hauteur et une des parties à levier articulé (17, 18) ou entre la partie de base (14) et une des parties à levier articulé (17, 18).

8. Siège de véhicule (1, 2) selon l'une des revendications 1 à 7, **caractérisé par** un dispositif d'entraînement (65) avec un élément d'entraînement pour le réglage en hauteur assisté de force de la partie d'appui de bras (9).

9. Siège de véhicule (1, 2) selon la revendication 8, **caractérisé en ce que** l'élément d'entraînement comprend un élément à ressort de traction (66).

10. Siège de véhicule (1, 2) selon la revendication 8 ou 9, **caractérisé en ce que** l'élément d'entraînement comprend un moteur d'entraînement (68) électrique.

11. Véhicule utilitaire, plus particulièrement véhicule utilitaire agricole (3), avec au moins un siège de véhicule (1, 2), **caractérisé par** un siège de véhicule (1, 2) selon l'une des revendications précédentes.
